# EUROPÄISCHE PATENTSCHRIFT

(11) **EP 0 780 283 B1**
(45) Veröffentlichungstag und Bekanntmachung des Hinweises auf die Patenterteilung: **15.03.2000**
(21) Anmeldenummer: 96116553.7
(22) Anmeldetag: 16.10.1996
(51) Int. Cl.: B62D 25/14

(54) **Fahrzeugaufbau**
Vehicle body assembly
Carrosserie de véhicule

(30) Priorität: 21.12.1995 DE 19547858; 14.02.1996 DE 19605370
(43) Veröffentlichungstag der Anmeldung: 25.06.1997
(73) Patentinhaber: Dr.Ing. h.c. F. Porsche Aktiengesellschaft, 70435 Stuttgart (DE)
(72) Erfinder: Götz, Erwin, 71263 Weil der Stadt (DE); Jöst, Rainer, D-75417 Mühlacker (DE); Mutter, Celemens, D-75210 Keltern (DE)

(56) Entgegenhaltungen:
- DE-A- 3 419 002
- GB-A- 2 065 038
- US-A- 4 400 011
- US-A- 4 682 788

## Beschreibung

Die Erfindung bezieht sich auf einen Fahrzeugaufbau mit einer Aussteifung nach dem Oberbegriff des Patentanspruches 1.

In der nicht vorveröffentlichten DE 195 47 858 A1 ist eine Stützstrebe beschrieben, die sich von der Lenksäuleneinheit bis zu Verstärkungsstreben des Fahrzeugaufbaus erstreckt. Diese Stützstrebe ist als separates Bauteil im Fahrzeugaufbau vorgesehen.

Aufgabe der Erfindung ist es, eine baulich vereinfachte Ausführung einer Stütze im Bereich der Windschutzscheibe und der Lenksäuleneinheit zu schaffen.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß zur Bildung einer Stütze ein Aufnahmeelement für den Kniefänger mit verwendet wird. Dieses vorhandene Element ist hierzu in einfacher Weise verlängert und die Verlängerung bildet dann die Stütze, welche endseitig mit einer Lenksäuleneinheit verbunden ist.

Das Aufnahmeelement ist vorzugsweise als schalenförmiges Teil ausgebildet und mit den Verstärkungsstreben des Fahrzeugaufbaus über eine große Basis verbunden, so daß sich für die Stütze ein steifer Knotenpunkt zwischen den Verstärkungsstreben ergibt und Zitterbewegungen der Lenksäuleneinheit wirksam unterbunden werden können. Die Verstärkungsstreben können über ihre Befestigungen zum Toleranzausgleich herangezogen werden.

Durch eine winkelförmige Gestaltung des Aufnahmeelements kann die Stütze stabil ausgeführt werden.

Nach einer bevorzugten Ausführungsform der Erfindung kann zur Bildung der Stütze auch nur ein Schenkel des winkelförmigen Aufnahmeelements verwendet werden, der dann mit einer abgerundeten Kante bzw. einem Radius ausgebildet ist.

Zur Gewichtserleichterung der Stütze bzw. des Aufnahmeelements können Ausnehmungen in Form von Längsschlitzen vorgesehen werden.

Die Befestigung der Stütze an der Lenksäuleneinheit erfolgt mittels Schraubmittel, wobei die Stütze endseitig mit einer Platte oder dergleichen verbunden ist, die eine Abstützfläche zum Lenkschutzrohr der Lenksäuleneinheit besitzt.

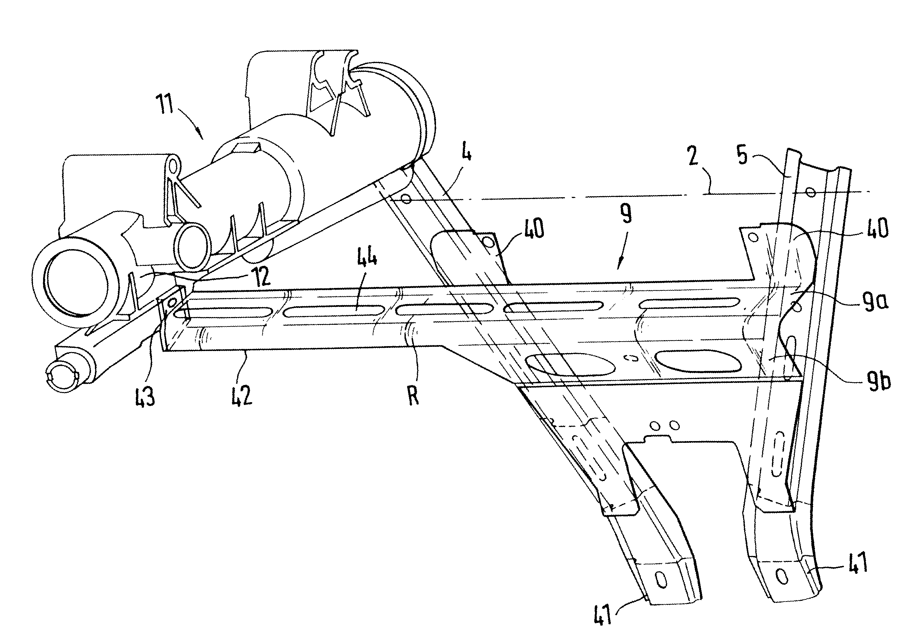

Ein Ausführungsbeispiel der Erfindung ist in der Zeichnung dargestellt und wird im folgenden näher beschrieben. Die Zeichnung zeigt in schaubildlicher Darstellung ein Aufnahmeelement für einen Kniefänger mit Stütze.

Der Fahrzeugaufbau eines Vorderwagens weist unterhalb eines Windschutzscheibenrahmens ein Aufnahmeelement 9 für einen Kniefänger auf. Dieses Aufnahmeelement 9 ist mit Verstärkungsstreben 4, 5 verbunden, die mit ihren oberen Enden an einem als strichpunktierte Linie dargestellten Querträger 2 und mit ihren unteren Enden an einem nicht gezeichneten Mitteltunnel befestigt sind.

Das Aufnahmeelement 9 besteht aus einem winkelförmigen Profil mit einem ersten etwa in einer horizontalen Ebene liegenden Schenkel 9a sowie einem nach unten weisenden weiteren Schenkel 9b. Insgesamt ist das Aufnahmeelement 9 als Schale ausgeführt, welche sich vom Profil wegerstreckende Arme 40 und 41 aufweist, die mit den Verstärkungsstreben 4, 5 jeweils verbunden sind.

Das Aufnahmeelement 9 weist im Bereich der beiden Verstärkungsstreben 4, 5 das winkelförmige Profil auf, an das sich ein Schenkel 9a oder 9b des Profils als Stütze 42 zur Lenksäuleneinheit 11 erstreckt und mit dieser fest verbunden ist.

Wie in der Abbildung näher dargestellt, bildet der in der horizontalen Ebene liegende Schenkel 9a des Profils die Stütze 42. Diese ist an der Kante mit einem Radius R versehen, so daß sich ein kleiner abgewinkelter Schenkel ergibt.

Die Verbindung der Stütze 42 mit der Lenksäuleneinheit 11 erfolgt am Lenkschutzrohr 12 mittels einer endseitigen Platte 43 der Stütze 42, welche über Schraubmittel am Lenkschutzrohr 12 festgesetzt wird.

Zur Gewichtserleichterung des Aufnahmeelements 9 und der Stütze 42 sind mehrere Ausnehmungen 44 vorgesehen, welche die Form von Längschlitzen aufweisen.

Das Aufnahmeelement ist Bestandteil des Fahrzeugaufbaus und somit ist keine Strebe erforderlich, die eventuell störend im Raum steht. Die Stütze 42 ist vom Kniefänger abgedeckt.

## Patentansprüche

1. Fahrzeugaufbau mit einer Aussteifung, bei der ein Rahmenquerträger der Windschutzscheibe zwischen vorderen Aufbausäulen eines Kraftfahrzeugs vorgesehen ist und Versteifungsstreben an einem Mitteltunnel des Fahrzeugbodens befestigt werden und ein weiterer Querträger (2) unterhalb des Rahmenquerträgers angeordnet ist, der einen Lagerbock für eine Lenksäuleneinheit (11) trägt und mit den vorderen Aufbausäulen sowie über Verstärkungsstreben mit dem Mitteltunnel verbunden ist, dadurch gekennzeichnet, daß ein mit den Verstärkungsstreben (4, 5) verbundenes Aufnahmeelement (9) für einen Kniefänger eine Stütze (42) umfaßt, welche über die eine Verstärkungsstrebe (4) hinausgeführt und mit der Lenksäuleneinheit (11) verbunden ist.

2. Fahrzeugaufbau nach Anspruch 1, dadurch gekennzeichnet, daß das Aufnahmeelement (9) aus einer Schale besteht, die vom Aufnahmeelement (9) sich flächig wegerstreckende Arme (40, 41) aufweist, und welche jeweils mit den Verstärkungsstreben (4, 5) verbunden sind.

3. Fahrzeugaufbau nach den Ansprüche 1 oder 2, dadurch gekennzeichnet, daß das Aufnahmeelement (9) aus einem winkelförmigen Profil mit einem etwa in einer horizontalen Ebene verlaufenden ersten Schenkel (9a) und einem daran anschließenden schräg abwärts geneigten weiteren Schenkel (9b) besteht und die Stütze (42) am Aufnahmeelement (9) vom ersten Schenkel (9a) gebildet wird.

4. Fahrzeugaufbau nach den Ansprüchen 1, 2 oder 3, dadurch gekennzeichnet, daß im Aufnahmeelement (9) sowie in der herausgeführten Stütze (42) Ausnehmungen (44) vorgesehen sind.

5. Fahrzeugaufbau nach einem oder mehreren der vorhergehenden Ansprüche, dadurch gekennzeichnet, daß die Stütze (42) am freien Ende eine Aufnahmeplatte (43) für mindestens eine Befestigungsschraube aufweist.

## Claims

1. A vehicle body with a reinforcement, in which a frame cross-member of the windscreen is provided between front body columns of a motor vehicle and reinforcement braces are secured to a central tunnel of the vehicle base, and a further cross-member (2) is arranged below the frame cross-member which carries a bearing stand for a steering-column unit (11) and is connected to the front body columns and by way of reinforcement braces to the central tunnel, **characterized in that** a receiving member (9) connected to the reinforcement braces (4, 5) for a knee-catching means comprises a support (42) extending beyond one reinforcement brace (4) and connected to the steering-column unit (11).

2. A vehicle body according to Claim 1, **characterized in that** the receiving member (9) comprises a shell provided with arms (40, 41) extending away from the receiving member (9) in a planar manner and which are each connected to the reinforcement braces (4, 5).

3. A vehicle body according to Claim 1 or 2, **characterized in that** the receiving member (9) comprises an angled section with a first limb (9a) extending substantially in a horizontal plane and a further limb (9b) attached thereto and inclined obliquely downwards, and the support (42) on the receiving member (9) is formed by the first limb (9a).

4. A vehicle body according to Claims 1, 2 or 3, **characterized in that** recesses (44) are provided in the receiving member (9) as well as in the extended support (42).

5. A vehicle body according to one or more of the preceding Claims, **characterized in that** the support (42) is provided at the free end with a receiving plate (43) for at least one fastening bolt.

## Revendications

1. Carrosserie de véhicule automobile présentant un raidisseur dans lequel une traverse du cadre du pare-brise est prévue entre des montants avant de la carrosserie d'un véhicule automobile et des entretoises de renfort sont fixées sur un tunnel central du plancher du véhicule, et une autre traverse est disposée au-dessous de la traverse du cadre et supporte un support pour un ensemble de colonne de direction (11) et est reliée aux montants avant de la carrosserie ainsi que, par des entretoises de renfort, au tunnel central, caractérisée en ce qu'un élément de réception (9) d'une butée pour genou, relié aux entretoises de renfort, (4, 5) comprend un appui (42) qui est guidé vers l'extérieur par une entretoise de renfort (4) et est relié à l'ensemble de colonne de direction (11).

2. Carrosserie de véhicule selon la revendication 1, caractérisé en ce que l'élément de réception (9) est constitué d'une coque qui présente des bras (40, 41) s'étendant à plat à partir de l'élément de réception (9) et qui sont reliés chacun aux entretoises de renfort (4, 5).

3. Carrosserie de véhicule selon les revendications 1 ou 2, caractérisé en ce que l'élément de réception (9) est constitué d'un profilé en équerre avec une première aile (9a) s'étendant dans un plan horizontal et une autre aile (9b) se raccordant à la première et inclinée obliquement vers le bas, et en ce que l'appui (42) est formé sur l'élément de réception (9) par la première aile (9a).

4. Carrosserie de véhicule selon les revendications 1, 2 ou 3, caractérisé en ce que des évidements (44) sont prévus dans l'élément de réception (9) ainsi que dans l'appui (42) guidé vers l'extérieur.

5. Carrosserie de véhicule selon une ou plusieurs des revendications précédentes, caractérisé en ce que l'appui (42) présente à son extrémité libre une plaque de réception (43) pour au moins une vis de fixation.
